# EUROPÄISCHE PATENTSCHRIFT

(11) **EP 3 910 373 B1**
(45) Veröffentlichungstag und Bekanntmachung des Hinweises auf die Patenterteilung: **11.05.2022**
(21) Anmeldenummer: 20174433.1
(22) Anmeldetag: 13.05.2020
(51) Int. Cl.: G01S 7/481

(54) **AUSLESEN VON LAWINENPHOTODIODENELEMENTEN IM GEIGERMODUS**
READING OF AVALANCHE PHOTODIODE ELEMENTS IN GEIGER MODE
LECTURE DES ÉLÉMENTS PHOTODIODES D'AVALANCHE EN MODE GEIGER

(43) Veröffentlichungstag der Anmeldung: 17.11.2021
(73) Patentinhaber: SICK AG, 79183 Waldkirch (DE)
(72) Erfinder: Marra, Martin, 79280 Au (DE); Clemens, Klaus, 79367 Weisweil (DE)

(56) Entgegenhaltungen:
- EP-A1- 3 339 820
- EP-A1- 3 637 140
- WO-A1-2018/221048
- US-A1- 2018 270 405

## Beschreibung

Die Erfindung betrifft einen Lichtempfänger mit einer Vielzahl von im Geigermodus betreibbaren Lawinenphotodiodenelementen und ein Verfahren zum Auslesen von Lawinenphotodiodenelementen nach dem Oberbegriff von Anspruch 1 beziehungsweise 15.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Dabei wird oft die Lichtlaufzeit mit einem bekannten Phasen- oder Pulsverfahren gemessen, um den Abstand eines angetasteten Objekts zu bestimmen.

Um den Messbereich zu erweitern, kann einerseits der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. Eine andere Möglichkeit zur Messbereichserweiterung besteht darin, zugleich mehrere Messpunkte mit mehreren Abtaststrahlen zu erfassen. Das lässt sich auch mit einem Laserscanner kombinieren, der dann nicht nur eine Überwachungsebene erfasst, sondern über eine Vielzahl von Überwachungsebenen einen dreidimensionalen Raumbereich. In den meisten Laserscannern wird die Abtastbewegung durch einen Drehspiegel erreicht. Gerade bei Verwendung mehrerer Abtaststrahlen ist aber im Stand der Technik auch bekannt, stattdessen den gesamten Messkopf mit Lichtsendern und Lichtempfängern rotieren zu lassen. Ein Mehrlagenscanner wird beispielsweise in EP 3 518 000 A1 beschrieben.

In einem optoelektronischen Sensor hat ein Lichtempfänger die Funktion, aus einfallendem Empfangslicht ein elektrisches Signal zu erzeugen. Die Nachweisempfindlichkeit einfacher Photodioden genügt in vielen Anwendungsfällen nicht. In einer Lawinenphotodiode (APD, Avalanche Photo Diode) löst das einfallende Licht einen kontrollierten Lawinendurchbruch (Avalanche Effect) aus. So werden die von einfallenden Photonen erzeugten Ladungsträger vervielfacht, und es entsteht ein Photostrom, der zu der Lichtempfangsintensität proportional, dabei aber wesentlich größer ist als bei einer einfachen PIN-Diode. Im sogenannten Geiger-Modus ist die Lawinenphotodiode oberhalb der Durchbruchspannung vorgespannt, so dass bereits ein einziger, durch ein einzelnes Photon freigesetzter Ladungsträger eine Lawine auslösen kann, die dann aufgrund der hohen Feldstärke sämtliche verfügbaren Ladungsträger rekrutiert. Die Lawinenphotodiode zählt somit wie der namensgebende Geigerzähler Einzelereignisse. Lawinenphotodioden im Geiger-Modus werden auch als SPAD (Single-Photon Avalanche Diode) bezeichnet.

Geiger-APDS oder SPADs sind also sehr schnelle, hochempfindliche Photodioden auf Halbleiterbasis. Ein Nachteil der hohen Empfindlichkeit ist, dass nicht nur ein Nutzlichtphoton, sondern auch ein schwaches Störereignis durch Fremdlicht, optisches Übersprechen oder Dunkelrauschen den Lawinendurchbruch auslösen kann. Dieses Störereignis trägt dann mit dem gleichen relativ starken Signal zum Messergebnis bei wie das empfangene Nutzlicht und ist davon auch aus dem Signal heraus nicht unterscheidbar. Anschließend bleibt die Lawinenphotodiode für eine Totzeit von ca. 5 bis 100 ns unempfindlich und fällt solange für weitere Messungen aus. Deshalb ist es üblich, mehrere SPADs zusammenzuschalten und statistisch auszuwerten. Eine gängige Bezeichnung für einen Lichtempfänger mit mehreren zusammengeschalteten SPADs bei Ausgabe eines Summensignals ist SiPM (Silicon Photo Multiplier), wobei Silizium nur der gängige, nicht aber einzige zugrundeliegende Halbleiter ist.

Um das elektrische Signal der Lawinenphotodioden des Lichtempfängers tatsächlich nutzen zu können, muss es auf geeignete Weise ausgelesen oder abgegriffen werden. Der Schaltungsaufwand dafür erhöht sich im Falle eines mehrkanaligen Systems, wie es ein Mehrlagenscanner darstellt, da eine entsprechende Mehrzahl von Empfangssignalen gewonnen und geeignet verstärkt werden muss. Die Empfangssignale dürfen einander außerdem nicht stören. Herkömmlich wird das durch eine Vervielfältigung der Schaltungen je Empfangskanal gelöst. Der große Bauteileaufwand wirkt sich nachteilig auf die Kosten und die Baugröße aus, zudem führt die erhöhte Leistungsaufnahme zu mehr Wärmeentwicklung. Alternativ ist beispielsweise auch bekannt, den Ausgang einer Transimpedanz-Verstärkervorstufe umzuschalten und einem gemeinsamen Empfangskanal zuzuführen. Diese Umschaltung ist aber langsam und erzeugt deutlich störende Umschalttransienten oder -spikes. Außerdem ist die TIA-Vorstufe dauernd aktiv und erhöht die Leistungsaufnahme.

Die EP 3 124 992 B2 offenbart einen Lichtempfänger mit Lawinenphotodioden im Geiger-Modus, der eine Signalabgriffschaltung mit einem aktiven Kopplungselement aufweist. In einer Ausführungsform werden mehrere Lichtempfänger mit jeweils einer Signalabgriffschaltung an einen gemeinsamen Messabschluss geführt. Damit werden die Lawinenphotodioden in mehrere Gruppen partitioniert, was schaltungs- und signaltechnische Vorteile hat, aber ein getrennter Zugriff auf das Signal einer einzelnen Gruppe ist nicht mehr möglich.

Die EP 3 339 820 A1 befasst sich mit einem Lichtempfänger mit ähnlichem Grundaufbau. Hier sind jeweils Lawinenphotodioden oder Gruppen als Pixel für einen ortsaufgelösten Lichtempfang vorgesehen. Das Ausgangssignal eines Pixels wird wahlweise einem Messpfad oder einem Ausblendungspfad zugeführt. Dadurch kann eine Art elektronische Blende realisiert werden, die Pixel abblendet, deren Ausgangssignal in den Ausblendungspfad fließt. Eine Zusammenführung von Ausgangssignalen oder gar eine steuerbare Auswahl der beitragenden Ausgangssignale gibt es dabei nicht.

Aus der GB 2 451 678 A ist eine SPM-Schaltung (Silicon Photomultiplier) bekannt, die mindestens ein Pixel mit mehreren Mikrozellen aufweist, die jeweils als Photodiode im Geiger-Modus ausgebildet sind. Es werden verschiedene Beschaltungen vorgeschlagen, um die Schalt- und Erholzeit der Mikrozellen zu minimieren, indem am Verbindungsknoten ein im Wesentlichen konstantes Potential aufrechterhalten wird. In einer Ausführungsform ist dafür ein Transistor vorgesehen. Es ist ausschließlich ein Zugriff auf das Summensignal vorgesehen.

Die US 2014/103196 A1 offenbart einen Lichtempfänger mit Lawinenphotodioden im Geigermodus, die bei Lichteinfall einen binären Puls ausgeben. In einer Spannungs-Strom-Wandlereinheit ist jeder Lawinenphotodiode eine Stromquelle zugeordnet, die einen anliegenden binären Puls der Lawinenphotodiode in einen Strompuls wandelt. Die Strompulse mehrerer Lawinenphotodioden werden als Summensignal zusammengeführt. Mit jeweils zwei Schaltern vor und hinter der Stromquelle können einzelne Lawinenphotodioden an- und abgekoppelt werden, somit kann eine Auswahl getroffen werden, von welchen Lawinenphotodioden Strompulse gesammelt werden. Die Verarbeitung ist rein digital auf Ebene von Spannungs- und Strompulsen, es werden keine analogen Ausgangssignale von Lawinenphotodioden verarbeitet und auch keine analogen Signale ausgegeben. Außerdem fließt der Strom in den Kanälen unabhängig vom Schalterzustand, so dass die Leistungsaufnahme erhöht ist.

In der EP 3 428 683 A1 werden bestimmte Zellen einer SPAD-Matrix über eine Multiplexermatrix mit TDCs (Time-to-Digital Converter) verbunden, um eine Lichtlaufzeit zu messen. Das Ausgangssignal der SPADs wird hier direkt als Trigger der TDCs genutzt, es gibt keine eigentliche Signalabgriffschaltung, und dementsprechend sind Transistoren oder sonstige Schaltelemente zum Auslesen weder vorhanden noch sinnvoll einsetzbar.

Es ist daher Aufgabe der Erfindung, einen gattungsgemäßen Lichtempfänger anzugeben, der ein besseres Messsignal bereitstellt.

Diese Aufgabe wird durch einen Lichtempfänger mit einer Vielzahl von im Geigermodus betreibbaren Lawinenphotodiodenelementen oder SPADs und ein Verfahren zum Auslesen von derartigen Lawinenphotodiodenelementen nach Anspruch 1 beziehungsweise 15 gelöst. Die Lawinenphotodiodenelemente bilden mehrere Gruppen und damit Kanäle. Vorzugsweise weist jede Gruppe mehrere Lawinenphotodiodenelemente auf, wobei zunächst nicht ausgeschlossen ist, dass eine Gruppe aus nur einem Lawinenphotodiodenelement besteht. Somit gibt es höchstens so viele Gruppen wie Lawinenphotodiodenelemente beziehungsweise eine zweite Vielzahl von Gruppen kleiner oder gleich einer ersten Vielzahl der Lawinenphotodiodenelemente. Eine Gruppe erzeugt jeweils bei Lichtempfang einen Photostrom oder Geigerstrom, der sich aus den Photoströmen oder Geigerströmen der Lawinenphotodiodenelemente der Gruppe zusammensetzt. Dabei wirken die Lawinenphotodiodenelemente im Geiger-Modus oder SPADs praktisch wie hoch lichtempfindliche Schalter, die durch Lichteinfall einen Geigerstrom auslösen.

Mehrere Ausleseschaltungen sind den Gruppen zugeordnet, vorzugsweise jeweils eine Ausleseschaltung genau einer Gruppe, wobei diese Zuordnung durch veränderte Definition der Gruppe ohnehin erfüllbar wäre. Die Ausleseschaltungen weisen jeweils ein aktives Kopplungselement auf, also nicht nur passive Elemente wie einen Widerstand oder Transformator. Das Kopplungselement besitzt drei Anschlüsse, nämlich einen Eingang für den auszulesenden Photostrom, einen Ausgang für einen dem Photostrom entsprechenden Messstrom und einen Steueranschluss für ein Steuersignal. Ausgangsseitig werden die Messströme der Ausleseschaltungen gesammelt, und so wird ein gemeinsames Messsignal gebildet.

Die Erfindung geht von dem Grundgedanken aus, ein gemeinsames Messsignal aus einer gezielten Auswahl von Ausleseschaltungen beziehungsweise davon ausgelesener Gruppen zu bilden. Damit werden effektiv bestimmte Gruppen oder Kanäle ausgewählt und andere solange abgeschaltet. Erreicht wird dies durch ein entsprechendes Steuersignal an dem Steueranschluss, der das Kopplungselement wahlweise aktiviert, so dass es einen Messstrom erzeugt, oder nicht aktiviert.

Die Erfindung hat den Vorteil, dass zunächst durch die aktive Kopplung die sehr schnellen Abläufe bei einem Lawinendurchbruch im Messsignal widergespiegelt werden. Durch eine noch bis zu einer hohen Grenzfrequenz eingangsseitig niederohmige Ausleseschaltung wird eine besonders hochfrequente beziehungsweise breitbandige Signalauskopplung ermöglicht. Es kann eine sehr hohe Eingangsdynamik unterschiedlichster Lichtverhältnisse verarbeitet werden. Der zusätzliche Aufwand der Ausleseschaltungen ist gering, somit werden geringe Kosten und eine besonders kompakte Umsetzung erreicht. Die jeweils inaktiven Ausleseschaltungen oder Kanäle können stromlos bleiben, damit entsteht keine zusätzliche Leistungsaufnahme oder Verlustleistung mit unerwünschter Wärmeentwicklung. Das Zu- oder Wegschalten von Ausleseschaltungen oder Kanälen erfolgt sehr schnell, und das System ist in kürzester Zeit wieder eingeschwungen. Dabei können Umschalttransienten wirkungsvoll unterdrückt werden. Die aktive Kopplung bewirkt eine sehr hohe Abschaltisolation, insbesondere bei Einsatz eines Transistors mit kleiner Kapazität zwischen Emitter und Kollektor.

Der Eingang bildet vorzugsweise bei aktiviertem Kopplungselement für den Photostrom einen virtuellen Kurzschluss gegen ein durch das Steuersignal vorgegebenes Potential. Praktisch wird dies nur bis auf wenige Ohm oder Bruchteile von einem Ohm gelingen. Es bedeutet aber, dass die schnellen, hochfrequenten Photoströme im Wesentlichen ungehindert zur Ausleseschaltung abfließen. Weiter erzeugt das Kopplungselement an seinem Ausgang vorzugsweise einen Messstrom, der dem Photostrom am Eingang in seinem zeitlichen Verlauf entspricht. Das Kopplungselement kann zudem den Pegel erhalten oder durch eine Verstärkung dafür sorgen, dass der Messstrom einen für die weitere Verarbeitung geeigneten Pegel aufweist. Das aktive Kopplungselement entkoppelt den Ausgang von dem Eingang in dem Sinne, dass die weitere Verarbeitung der Messströme nicht mehr auf die eingangsseitigen Photoströme zurückwirkt

Der Verlauf eines jeweiligen Messstroms weicht bevorzugt erst für Änderungen im höheren Gigahertzbereich, insbesondere oberhalb zwei oder drei GHz, durch frequenzbedingte Verluste von dem eingangsseitigen Photostrom ab. Deutlich spürbare frequenzbedingte Verluste ergeben sich folglich erst für Frequenzen des einfallenden Lichtsignals oberhalb von einigen GHz. Dies wird durch das aktive Kopplungselement ermöglicht. Somit gelingt es, Pulse und Flanken auch im Sub-Nanosekundenbereich aufzulösen.

Die Gruppen sind vorzugsweise jeweils als gemeinsames Empfangselement ausgebildet, insbesondere als Siliziumphotomultiplier. Damit werden die von mehreren Lawinenphotodiodenelementen erzeugten Photoströme schon vor dem Eingang der Ausleseschaltung miteinander kombiniert. Ein Beispiel ist eine Umsetzung als Siliziumphotomultiplier (SiPM), der ein quasi-analoges Bauteil darstellt. Dagegen kann eine einzelne SPAD mit ihrem stets gleichen, maximalen Ausgangssignal durch unkontrollierten Lawinendurchbruch bei Lichteinfall im Extremfall schon nur eines einzigen Photons als digital aufgefasst werden. Die Anforderungen für die Kanalwahl oder das Multiplexing sind bei SPADs und SiPM unterschiedlich, und die Erfindung eignet sich insbesondere für die Verarbeitung mehrerer SiPM-Kanäle.

Zwischen einer Gruppe und einer Ausleseschaltung ist vorzugsweise eine kapazitive Kopplung vorgesehen. Das führt zu einer besonders effizienten und störungsfreien Auskopplung. Da vorzugsweise die Gruppen als SiPM ausgebildet sind, werden kombinierte Photoströme mehrerer Lawinenphotodiodenelemente auf den Eingang der Ausleseschaltung geführt. Die kapazitive Kopplung betrifft mindestens eine Gruppe und Ausleseschaltung, vorzugsweise jedoch alle, und das gilt sinngemäß auch für die im Folgenden beschriebenen weiteren vorteilhaften Ausprägungen und Eigenschaften von Gruppen und Ausleseschaltungen.

Das aktive Kopplungselement weist vorzugsweise einen Transistor auf. Das ist ein einfaches Element, das sehr kostengünstig und kompakt verwendet werden kann. Die technische Ausführung des Transistors ist auf vielfältige Weise denkbar und umfasst Bipolartransistoren oder Feldeffekttransistoren in ihren verschiedenen Bauformen. Allerdings sollte vorzugsweise ein Hochfrequenztransistor verwendet werden, um die Vorteile einer großen Bandbreite des Lichtempfängers im Gigahertz-Bereich tatsächlich zu erzielen.

Das Kopplungselement weist vorzugsweise genau einen Transistor auf, und nochmals besteht das Kopplungselement aus dem Transistor. Damit ist das Kopplungselement einstufig, nicht mehrstufig wie beispielsweise ein herkömmlich zum Auslesen eingesetzter Transimpedanzverstärker. Es sind auch nicht beispielsweise mehrere Transistoren erforderlich, um einerseits den Photostrom in einen Messstrom zu wandeln und andererseits mittels des Steuersignals eine jeweilige Gruppe zu aktivieren oder zu deaktivieren. Vielmehr werden diese Funktionen vom selben Transistor erfüllt, so dass sich eine besonders kompakte und kostengünstige Schaltung ergibt.

Der Transistor ist vorzugsweise in Basisschaltung oder Gateschaltung betrieben, und die Basis oder das Gate ist mit dem Steueranschluss verbunden beziehungsweise bildet den Steueranschluss. Die jeweils alternativ genannten Begriffe beziehen sich einerseits auf einen Bipolartransistor und andererseits auf einen FET, um nochmals deutlich herauszustellen, dass der Transistor nicht auf eine bestimmte Technologie festgelegt sein soll. Wird beispielsweise alternativ Masse oder eine Steuerspannung mit einem bestimmten Wert wie 1,8 V an der Basis angelegt, so trägt die Ausleseschaltung mit diesem Transistor ihren Messstrom oder nichts zu dem gemeinsamen Messsignal bei. Vor dem Steueranschluss kann noch ein Tiefpassfilter vorgesehen sein, um Umschalttransienten zu unterdrücken, wenn das Steuersignal wechselt, wie im genannten Beispiel von Masse auf 1,8V oder umgekehrt.

Der Eingang ist vorzugsweise mit dem Emitter oder mit Source verbunden beziehungsweise davon gebildet und/oder der Ausgang ist mit dem Kollektor oder mit Drain verbunden beziehungsweise davon gebildet. Erneut sind alternativ die Begriffe eines Bipolartransistors oder eines FETs genannt. Die Photoströme der Lawinenphotodiodenelemente einer Gruppe werden erst zusammen- und dann auf den Eingang geführt, vorzugsweise mittels kapazitiver Kopplung wie schon erwähnt. Die Lawinenphotodiodenelemente sind je nach Ausführungsform mit ihrer Anode oder Kathode angeschlossen, wobei eine jeweilige Signalumkehr zu berücksichtigen ist. Das ausgangsseitige Zusammenschließen der Ausleseschaltungen erfolgt vorzugsweise durch eine Ausgangsleitung, die mit dem jeweiligen Ausgang an Kollektor beziehungsweise Drain verbunden ist.

Eine Ausgangsleitung, mit der die Ausleseschaltungen ausgangsseitig zusammengeschlossen sind, ist vorzugsweise über eine Induktivität nach einer Versorgungsspannung geschaltet, beziehungsweise die Ausgangsleitung weist vorzugsweise für das gemeinsame Messsignal ein Hochpassfilter auf. Das Hochpassfilter ist insbesondere als Induktivität von den Ausgängen nach Versorgung in Kombination mit einem Ausgangskondensator umgesetzt. Damit werden Umschalttransienten beim Aktivieren und Deaktivieren einer jeweiligen Gruppe beziehungsweise eines jeweiligen Kanals weiter unterdrückt. In der Ausgangsleitung können weitere Schaltungselemente vorgesehen sein, beispielsweise ein parallel und/oder in Reihe geschalteter Widerstand zum Formen des gemeinsamen Messsignals.

Die Lawinenphotodioden sind vorzugsweise mit einem Strombegrenzungselement und/oder einer steuerbaren Vorspannungsversorgung verbunden. Damit wird einerseits eine Überlast oder zu große Wärmeentwicklung verhindert. Über die Vorspannung kann die Auslösewahrscheinlichkeit der Lawinenphotodiodenelemente angepasst werden, je nachdem, wie stark die Durchbruchspannung überschritten ist. Mit einer Vorspannung unterhalb der Durchbruchspannung wird der Geiger-Modus verlassen, und wegen der dann Größenordnungen geringeren intrinsischen Verstärkung können somit einzelne Lawinenphotodiodenelemente praktisch ausgeschaltet werden. Das sollte nicht mit einer Kanalwahl durch Aktivieren von Gruppen verwechselt werden, sondern ist eine zusätzliche optionale Stellschraube zur Empfindlichkeitsanpassung oder beispielsweise zum Anpassen an eine Lichtfleckposition (ROI, Region of Interest).

Die Auswahlschaltung ist bevorzugt für ein Aktivieren von Gruppen in einem Multiplexverfahren ausgebildet. Die Auswahlschaltung schaltet also nacheinander durch die verschiedenen Gruppen oder Kanäle. Das Multiplexing-Schema, d.h. Parameter wie die Reihenfolge, die Dauer einer jeweiligen Aktivierung und die beteiligten Gruppen, sind frei wählbar.

Die Auswahlschaltung ist bevorzugt dafür ausgebildet, mehrere Gruppen gleichzeitig zu aktivieren. Auch wenn häufig ein Multiplexing mit nur einer aktiven Gruppe gewünscht ist, erlaubt die Erfindung ebenso, zwei oder mehr Gruppen zugleich zu aktivieren und deren Messströme zu sammeln. Dabei sind beliebige Schemata denkbar, welche Gruppen einander abwechseln oder beispielsweise auch mit zeitlicher Teilüberlappung in ihrer Aktivität ineinander übergehen.

Die Auswahlschaltung ist für eine gleichzeitige Veränderung des Steuersignals in mehreren Gruppen ausgebildet. Es muss also beispielsweise beim Multiplexing nicht erst eine Gruppe deaktiviert und dann die nächste Gruppe aktiviert werden, die Umschaltung erfolgt vorzugsweise simultan. Es gibt dabei keine schädlichen Wechselwirkungen, und die Einschwingzeit bleibt kurz und in einem Bruchteil der Messzeit.

In vorteilhafter Weiterbildung weist ein optoelektronischer Sensor zur Erfassung eines Objekts in einem Überwachungsbereich mindestens einen Lichtsender zum Aussenden mehrerer voneinander separierter Lichtstrahlen und einen erfindungsgemäßen Lichtempfänger zum Erzeugen von Empfangssignalen aus an dem Objekt remittierten Lichtstrahlen sowie eine Steuer- und Auswertungseinheit zur Gewinnung von Informationen über das Objekt aus den Empfangssignalen auf. Bevorzugt ist dabei jeweils eine Gruppe einem Lichtstrahl zugeordnet.

In einem derartigen Mehrfachtaster sind mehrere Lichtsender vorhanden, oder das Licht eines Lichtsenders wird in mehrere Lichtstrahlen aufgespalten, oder es ist eine Mischung aus beidem vorgesehen. Die Lichtstrahlen sind nicht als Strahlen im Sinne der Strahlenoptik innerhalb eines größeren Lichtbündels zu verstehen, sondern als voneinander separierte Lichtbündel und somit vereinzelte Abtaststrahlen, die im Überwachungsbereich beim Auftreffen auf ein Objekt entsprechend vereinzelte, voneinander beabstandete Lichtflecken erzeugen. Durch die erfindungsgemäße Ausgestaltung des Lichtempfängers können selektiv bestimmte Lichtstrahlen empfangen werden, beispielsweise in einem Multiplexing-Schema nacheinander. Somit lassen sich für die aus unterschiedlicher Richtung remittierten Lichtstrahlen ganz gezielt jeweilige Empfangssignale einzeln oder in gewünschten Kombinationen erzeugen und auswerten.

Die Steuer- und Auswertungseinheit ist bevorzugt dafür ausgebildet, aus einer Lichtlaufzeit zwischen Aussenden der Lichtstrahlen und Empfangen der remittierten Lichtstrahlen einen Abstand des Objekts zu bestimmen. Der Sensor wird dadurch entfernungsmessend. Alternativ wird lediglich die Anwesenheit eines Objekts festgestellt und beispielsweise als Schaltsignal ausgegeben.

Der Sensor ist bevorzugt als mehrstrahliger Laserscanner ausgebildet und weist eine bewegliche Ablenkeinheit auf, mit deren Hilfe die ausgesandten Lichtstrahlen periodisch durch den Überwachungsbereich geführt werden. Wie einleitend erläutert, tastet ein derartiger Mehrebenen- oder Mehrlagenscanner mit der Bewegung der beweglichen Ablenkeinheit den Überwachungsbereich in mehreren Ebenen ab. Die Ablenkeinheit ist in beliebiger Weise beispielsweise als Drehspiegel, jedoch vorzugsweise in Form einer drehbaren Abtasteinheit ausgebildet, die praktisch einen beweglichen Messkopf bildet, in dem der Lichtsender und/oder der Lichtempfänger und bevorzugt auch zumindest Teile der Steuer- und Auswertungseinheit untergebracht sind.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittdarstellung eines als Laserscanner ausgebildeten optoelektronischen Sensors;
- Fig. 2: eine beispielhafte Schaltungsdarstellung eines Lichtempfängers mit mehreren Gruppen von SPADs und den Gruppen zugeordneten Ausleseschaltungen, die ein selektives Aktivieren und Deaktivieren der Gruppen ermöglichen; und
- Fig. 3: eine Schaltungsdarstellung eines alternativen Anschlusses von SPADs.

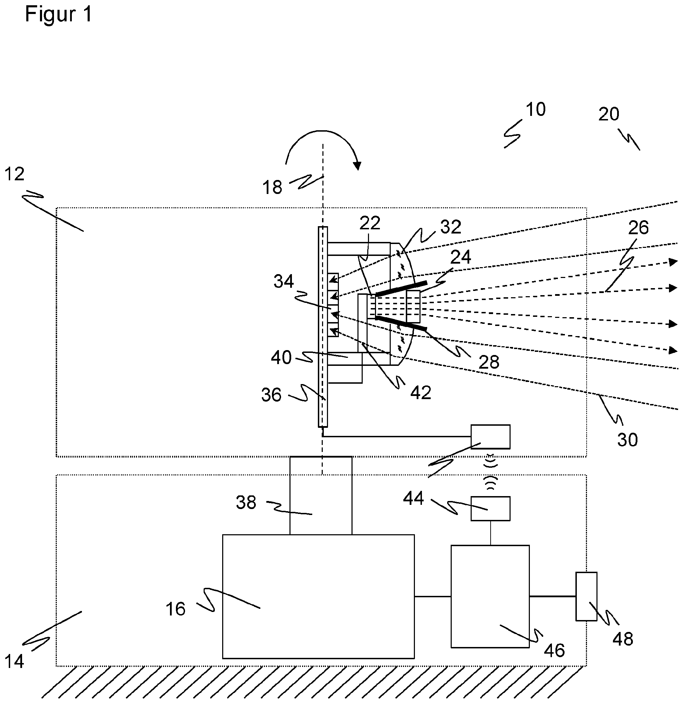

Figur 1 zeigt eine schematische Schnittdarstellung durch einen optoelektronischen Sensor 10 in einer Ausführungsform als Laserscanner. Der Sensor 10 umfasst in grober Aufteilung eine bewegliche Abtasteinheit 12 und eine Sockeleinheit 14. Die Abtasteinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Abtasteinheit 12 in eine Drehbewegung um eine Drehachse 18 versetzt, um so einen Überwachungsbereich 20 periodisch abzutasten.

In der Abtasteinheit 12 erzeugen eine Lichtsendereinheit 22, beispielsweise mit einer LED oder einem Laser in Form eines Kantenemitters oder VCSELs, mit Hilfe einer nur als Funktionsblock dargestellten Sendeoptik 24 mehrere Sendelichtstrahlen 26 mit gegenseitigem Winkelversatz, die in den Überwachungsbereich 20 ausgesandt werden.

Die Erzeugung der mehreren Sendelichtstrahlen 26 ist beispielsweise über eine Vielzahl von Lichtquellen und/oder durch optische Elemente wie Strahlteiler, Lichtleiter oder diffraktive Elemente möglich. Zur Vermeidung von Streulicht innerhalb des Sensors 10 kann der interne Lichtweg der Sendelichtstrahlen 26 von einem lichtundurchlässigen Tubus 28 abgeschirmt werden.

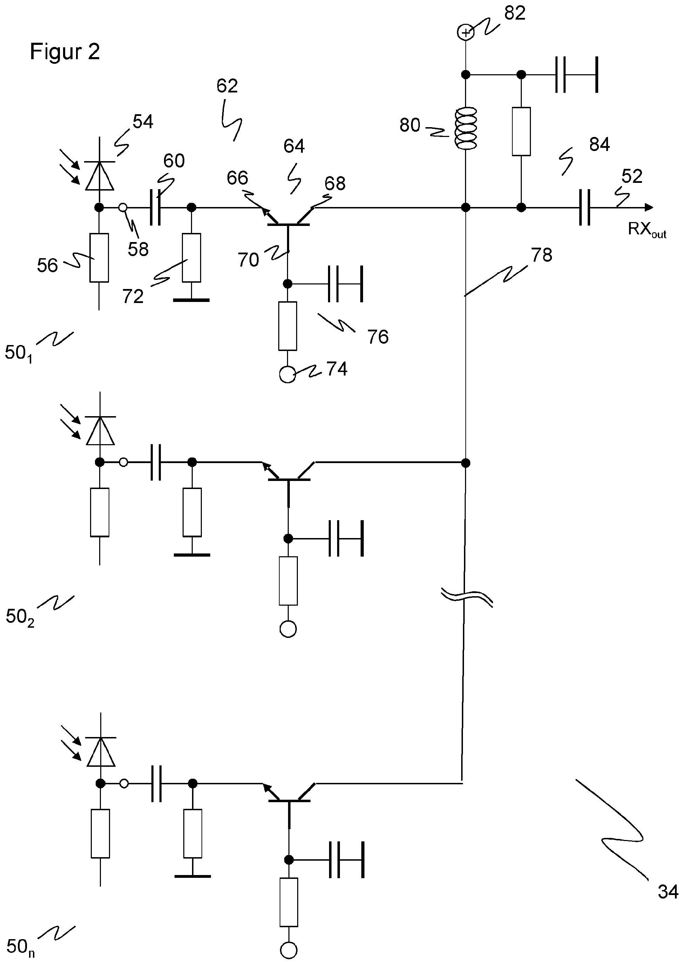

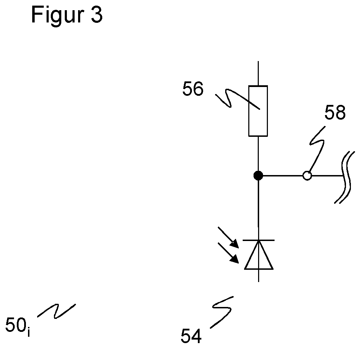

Treffen die Sendelichtstrahlen 26 in dem Überwachungsbereich 20 auf ein Objekt, so kehren entsprechende remittierte Lichtstrahlen 30 zu dem Sensor 10 zurück. Die remittierten Lichtstrahlen 30 werden von einer Empfangsoptik 32 auf einen Lichtempfänger 34 geführt. Der Lichtempfänger 34 weist mehrere Gruppen von SPADs (Single-Photon Avalanche Diode) beziehungsweise mehrere SiPMs (Silicon Photomultiplier) auf, um die mehreren remittierten Lichtstrahlen 30 zu erfassen. Dabei ist vorzugsweise der Empfangspfad mit der Gestaltung der Empfangsoptik 32 sowie der Anordnung und Ausrichtung von Lichtempfänger 34 und Empfangsoptik 32 so ausgelegt, dass jeweils ein remittierter Lichtstrahl 30 auf eine bestimmte Gruppe von SPADs beziehungsweise ein SiPM fällt. Wechselwirkungen sind aber in der Regel insbesondere nicht für alle Abstände von Objekten zu vermeiden, was ein Grund dafür ist, die remittierten Lichtstrahlen 30 getrennt in einem Multiplexbetrieb zu empfangen. Die weitere Ausgestaltung des Lichtempfängers 34 für das Auslesen der Empfangssignale bestimmter Gruppen von SPADs beziehungsweise SiPMs wird später unter Bezugnahme auf die Figuren 2 und 3 näher erläutert.

Der Lichtempfänger 34 ist in dieser Ausführungsform auf einer Leiterkarte 36 angeordnet, die auf der Drehachse 18 liegt und mit der Welle 38 des Antriebs 16 verbunden ist. Die Empfangsoptik 32 stützt sich durch Beinchen 40 auf der Leiterkarte 36 ab und hält eine weitere Leiterkarte 42 der Lichtsendereinheit 22. Die beiden Leiterkarten 36, 42 sind untereinander verbunden und können auch als gemeinsame Flexprint-Leiterkarte ausgebildet sein.

Der in Figur 1 gezeigte optische Aufbau mit zwei übereinander geschichteten Leiterkarten 36, 42 oder Leiterkartenbereichen und einer zentral innerhalb der Empfangsoptik 32 angeordneten gemeinsamen Sendeoptik 24 ist rein beispielhaft zu verstehen. So wäre alternativ jede andere an sich beispielsweise von eindimensionalen optoelektronischen Sensoren oder Laserscannern bekannte Anordnung wie etwa eine biaxiale Anordnung beziehungsweise Doppelaugenanordnung oder die Verwendung eines Umlenk- oder Strahlteilerspiegels möglich. Weiterhin ist denkbar, Lichtsendereinheit 22 und Lichtempfänger 34 auf einer gemeinsamen Leiterkarte zu montieren, bei gegenüber Figur 1 veränderter Anordnung auch auf einer gemeinsamen Leiterkarte, die in nur einer Ebene liegt.

Eine berührungslose Versorgungs- und Datenschnittstelle 44 verbindet die bewegliche Abtasteinheit 12 mit der ruhenden Sockeleinheit 14. Dort befindet sich eine Steuer- und Auswertungseinheit 46, die zumindest teilweise auch auf der Leiterkarte 36 oder an anderem Ort in der Abtasteinheit 12 untergebracht sein kann. Die Steuer- und Auswertungseinheit 46 steuert die Lichtsendereinheit 22 und erhält das Empfangssignal des Lichtempfängers 34 zur weiteren Auswertung. Sie steuert außerdem den Antrieb 16 und erhält das Signal einer nicht gezeigten, von Laserscannern allgemein bekannten Winkelmesseinheit, welche die jeweilige Winkelstellung der Abtasteinheit 12 bestimmt.

Zur Auswertung wird vorzugsweise mit einem an sich bekannten Lichtlaufzeitverfahren die Distanz zu einem angetasteten Objekt gemessen. Zusammen mit der Information über die Winkelstellung von der Winkelmesseinheit stehen nach jeder Scanperiode mit Winkel und Entfernung zweidimensionale Polarkoordinaten aller Objektpunkte in einer Abtastebene zur Verfügung. Die jeweilige Abtastebene ist über die Identität des jeweiligen remittierten Lichtstrahls 30 und dessen Erfassungsort auf dem Lichtempfänger 34 ebenfalls bekannt, so dass insgesamt ein dreidimensionaler Raumbereich abgetastet wird.

Damit sind die Objektpositionen beziehungsweise Objektkonturen bekannt und können über eine Sensorschnittstelle 48 ausgegeben werden. Die Sensorschnittstelle 48 oder ein weiterer, nicht gezeigter Anschluss dienen umgekehrt als Parametrierschnittstelle. Der Sensor 10 kann auch als Sicherheitssensor für einen Einsatz in der Sicherheitstechnik zur Überwachung einer Gefahrenquelle ausgebildet sein, wie sie beispielsweise eine gefährliche Maschine darstellt. Dabei wird ein Schutzfeld überwacht, das während des Betriebs der Maschine vom Bedienpersonal nicht betreten werden darf. Erkennt der Sensor 10 einen unzulässigen Schutzfeldeingriff, etwa ein Bein einer Bedienperson, so löst er einen Nothalt der Maschine aus. In der Sicherheitstechnik eingesetzte Sensoren 10 müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Insbesondere kann dann die Sensorschnittstelle 48 als sichere Ausgabeschnittstelle (OSSD, Output Signal Switching Device) ausgebildet sein, um bei einem Schutzfeldeingriff durch ein Objekt ein sicherheitsgerichtetes Abschaltsignal auszugeben.

Der dargestellte Sensor 10 ist ein Laserscanner mit rotierendem Messkopf, nämlich der Abtasteinheit 12. Alternativ ist auch eine periodische Ablenkung mittels Drehspiegel denkbar. Bei mehreren Sendelichtstrahlen 26 hat das aber den Nachteil, dass es von der jeweiligen Drehstellung abhängt, wie die mehreren Sendelichtstrahlen 26 in den Überwachungsbereich 20 fallen, denn deren Anordnung rotiert durch den Drehspiegel, wie bekannte geometrische Überlegungen ergeben. Eine weitere alternative Ausführungsform schwenkt die Abtasteinheit 12 hin und her, entweder anstelle der Drehbewegung oder zusätzlich um eine zweite Achse senkrecht zur Drehbewegung, um auch in Elevation eine Abtastbewegung zu erzeugen.

Während der Rotation des Sensors 10 wird durch jeden der Sendelichtstrahlen 26 jeweils eine Fläche abgetastet. Nur bei einem Ablenkwinkel von 0°, also einem in Figur 1 nicht vorhandenen horizontalen Sendelichtstrahl, wird dabei eine Ebene des Überwachungsbereichs 20 abgetastet. Die übrigen Sendelichtstrahlen tasten die Mantelfläche eines Kegels ab, der je nach Ablenkwinkel unterschiedlich spitz ausgebildet ist. Bei mehreren Sendelichtstrahlen 26, die in unterschiedlichen Winkeln nach oben und unten abgelenkt werden, entsteht insgesamt als Abtastgebilde eine Art Schachtelung von mehreren Sanduhren. Auch diese Flächen werden hier manchmal vereinfachend als Abtastebenen bezeichnet.

Auch die Ausführung als Laserscanner ist beispielhaft. Es ist ebenso ein eindimensionaler Mehrfachtaster ohne periodische Bewegung möglich, der dann praktisch nur aus der ruhenden Abtasteinheit 12 mit entsprechender Elektronik, jedoch ohne Sockeleinheit 14 besteht. Der Einsatz des Lichtempfängers 34 ist darüber hinaus in jedem optoelektronischen Sensor denkbar, in dem selektiv das Empfangssignal bestimmter Teilbereiche ausgelesen werden soll, wie etwa einem Solid-State-LiDAR und letztlich allen optoelektronischen Sensoren mit einer Form von Ortsauflösung des Lichtempfängers 34.

Figur 2 zeigt eine schematische Schaltungsdarstellung des Lichtempfängers 34. Es sind mehrere Empfangskanäle 50₁..50ₙ vorgesehen, die vorzugsweise untereinander gleichartig aufgebaut sind. Damit können beispielsweise die verschiedenen remittierten Lichtstrahlen 30 eines Mehrfachtasters oder Mehrlagenscanners erfasst werden. Die Funktion der Schaltung ist es, an einem gemeinsamen Ausgang 52 ein gemeinsames Messsignal RXₒᵤₜ bereitzustellen, das jeweils von beispielsweise in einem Multiplexing ausgewählten Empfangskanälen 50₁..50ₙ gespeist ist. Somit werden die mehreren Empfangskanäle 50₁..50ₙ selektiv, insbesondere nacheinander, auf einen gemeinsamen Empfangskanal aufgeschaltet und ausgangsseitig beispielsweise für eine nachgelagerte digitale Signalauswertung einem nicht mehr gezeigten gemeinsamen A/D-Wandler zugeführt.

Die Empfangskanäle 50₁..50ₙ weisen jeweils eine Gruppe von Lawinenphotodiodenelementen 54 auf, die durch eine Vorspannung oberhalb der Durchbruchspannung im Geigermodus betrieben werden können (SPAD, Single-Photon Avalanche Photodiode). Die interne Kapazität der Lawinenphotodiodenelemente 54 wird dabei jeweils über einen Ladewiderstand 56 aufgeladen. In der vereinfachten Darstellung besteht jede Gruppe aus nur einem Lawinenphotodiodenelement 54. Obwohl das auch in der Praxis denkbar ist, sind vorzugsweise mehrere Lawinenphotodiodenelemente 54 je Gruppe vorhanden. In einer bevorzugten Ausführungsform sind die Gruppen jeweils als SiPMs (Silicon Photomultiplier) ausgestaltet. In allen diesen Varianten werden die jeweils bei Lichteinfall erzeugten Photo- oder Geigerströme an einem Gruppenanschluss 58 der Gruppe beziehungsweise des SiPM kombiniert.

Über eine kapazitive Kopplung 60 fließt der kombinierte Photostrom in eine Ausleseschaltung 62. Darin ist ein aktives Kopplungselement vorgesehen, das bevorzugt durch einen Transistor 64 und nochmals bevorzugt durch genau einen Transistor 64 realisiert ist. Der Transistor 64 ist hier ein Bipolartransistor, der mit seinem Emitter als Eingang 66 über die kapazitive Kopplung 60 mit dem Gruppenanschluss 58 und mit seinem Kollektor als Ausgang 68 verschaltet ist. Die Basis fungiert als Steueranschluss 70. Alternativ kann ein Feldeffekttransistor eingesetzt werden, mit einer entsprechenden Verschaltung bei Ersetzung von Emitter durch Source, Kollektor durch Drain und Basis durch Gate. Der Arbeitspunkt des Transistors 64 wird beispielsweise über einen Widerstand 72 eingestellt.

Durch Anlegen eines Steuersignals 74 an der Basis wird der jeweilige Empfangskanal 50₁..50ₙ deaktiviert oder aktiviert. Dazu wird beispielsweise wahlweise ein Massepotential (low, deaktiviert) oder eine Steuerspannung (high, aktiviert, zum Beispiel 1,8V) als Steuersignal 74 angelegt. Ein Tiefpass 76 vor der Basis reduziert dabei Umschaltspikes, wenn von dem einen Modus in den anderen Modus gewechselt wird.

Ist das Steuersignal 74 zum Deaktivieren angelegt, so wird der Photostrom in dem Transistor 64 nicht verstärkt, sondern macht sich vielmehr am Kollektor gar nicht bemerkbar. Der Empfangskanal 50₁...50ₙ ist solange ausgangsseitig quasi nicht vorhanden.

Umgekehrt bietet bei dem Steuersignal 74 zum Aktivieren der Transistor 64 dem Photostrom einen virtuellen Kurzschluss quasi ohne Widerstand an. Deshalb steht während eines Lawinendurchbruchs nahezu der vollständige Photostrom zur Verfügung. Der Photostrom wird ausgangsseitig, d.h. am Kollektor oder Ausgang 68, in einen Messstrom abgebildet, der in seinem zeitlichen Verlauf dem Photostrom entspricht. Dabei können gewünschte Veränderungen und insbesondere eine Verstärkung durch die Übertragungsfunktion des Transistors 64 erzielt werden. Der Ausgangskreis jenseits des Kollektors ist von dem Eingangskreis vor dem Emitter entkoppelt, so dass die Weiterverarbeitung des Messstroms den Photostrom nicht beeinflusst.

Die Kollektoren beziehungsweise Ausgänge 68 der Ausleseschaltungen 62 der Empfangskanäle 50₁..50ₙ sind über eine gemeinsame Ausgangsleitung 78 miteinander verbunden. Die Ausgangsleitung 78 ist vorzugsweise über eine Induktivität 80 nach Versorgungsspannung 82 geschaltet. Das gemeinsame Messsignal RXₒᵤₜ wird über einen Hochpass 84 ausgekoppelt und dann weiterverarbeitet, beispielsweise einem Verstärker und/oder einem A/D-Wandler zugeführt. Um das gemeinsame Messsignal RXₒᵤₜ zu formen, können noch Schaltelemente vorgesehen sein, etwa weitere Widerstände beispielsweise in Reihe zur Induktivität 80 oder auch parallel geschaltet werden.

Welche Empfangskanäle 50₁..50ₙ jeweils zu dem gemeinsamen Messsignal RXₒᵤₜ beitragen, ist durch Anlegen der jeweiligen Steuersignale 74 frei wählbar. Eine nicht gezeigte Auswahlschaltung legt dafür wechselnde Steuersignale 74 in passendem zeitlichen Ablauf an. Ein bevorzugtes Aktivierungsschema ist ein Multiplexing, bei dem nacheinander jeweils nur ein Steuersignal 74 auf "high" gesetzt und damit der zugehörige Empfangskanal 50₁..50ₙ aktiviert wird, während die übrigen Steuersignale 74 "low" und damit diese Empfangskanäle 50₁..50ₙ deaktiviert sind. Das gemeinsame Messsignal RXₒᵤₜ ist dann dasjenige des jeweils aktiven Empfangskanals 50₁..50ₙ. Es ist ebenso denkbar, mehrere Empfangskanäle 50₁..50ₙ gleichzeitig aktiv zu schalten. Dann ergibt sich in dem gemeinsamen Messsignal RXₒᵤₜ eine Signaladdition.

Erfindungsgemäß haben die Ausleseschaltungen 62 beziehungsweise deren Transistoren 64, die zum Auslesen der Photoströme ohnehin benötigt werden, eine Doppelfunktion. Sie werden durch Anlegen der Steuersignale 74 praktisch ohne Mehraufwand auch zur Auswahl von Empfangskanälen 50₁..50ₙ und insbesondere für ein Multiplexing genutzt. Das schnelle Auslesen von Photoströmen, das eine Bandbreite im GHz-Bereich ermöglicht, wird dadurch in keiner Weise beeinträchtigt. Es gibt keine schädlichen Wechselwirkungen, und die Einschwingzeiten nach einer Veränderung der Steuersignale 74 liegen im Bereich eines Bruchteils der Messzeit des Systems, sind somit sehr kurz. Umschalttransienten oder -spikes können durch zusätzliche Schaltungselemente wie der Tiefpass 76 vor der Basis oder der Hochpass 84 vor dem gemeinsamen Ausgang 52 verbessert werden. Eine sehr kleine C-E-Kapazität des Transistors 64 verbessert zudem die Isolationseigenschaften eines inaktiven Kanals.

Figur 3 illustriert eine weitere Ausführungsform des Lichtempfängers 34. Es ist nur stellvertretend der eingangsseitige Anteil eines Empfangskanals 50ᵢ dargestellt. Anders als in Figur 2 sind die Lawinenphotodiodenelemente 54 nun über ihre Kathode mit dem Gruppenanschluss 58 und mit ihrer Anode mit Masse verbunden. Der Anschluss von Anode und Kathode ist demnach vertauscht. Das hat zwar Auswirkungen auf den Photostrom, dessen Polarität gedreht wird, aber wenn dies berücksichtigt wird, so ist auch diese Anschlussvariante möglich.

Das mit Bezugszeichen 56 versehene Schaltungselement war bisher nur als Ladewiderstand beschrieben. Alternativ kann es als Regler ausgestaltet sein, der beispielsweise den Strom begrenzt oder der das Lawinenphotodiodenelement 54 mit einer bestimmten Vorspannung versorgt. Damit kann insbesondere ein Lawinenphotodiodenelement deaktiviert werden, indem die Vorspannung unter die Durchbruchspannung abgesenkt wird. Dieses Deaktivieren, das direkt den Lawinendurchbruch unterdrückt, darf nicht mit dem Deaktivieren einer Ausleseschaltung 62 durch ein Steuersignal 74 verwechselt werden, sondern bietet eine weitere Stellschraube.

## Patentansprüche

1. Lichtempfänger (34) mit einer Vielzahl von Lawinenphotodiodenelementen (54), die jeweils mit einer Vorspannung oberhalb einer Durchbruchspannung vorspannbar und somit in einem Geiger-Modus betreibbar sind und die mehrere Gruppen bilden, die jeweils bei Lichtempfang einen Photostrom erzeugen, und mit mehreren Ausleseschaltungen (62) zum Auslesen einer Gruppe von Lawinenphotodiodenelementen (54), die jeweils ein aktives Kopplungselement (64) mit einem Eingang (66) für einen Photostrom, einem Steueranschluss (70) und einem Ausgang (68) für einen dem Photostrom entsprechenden Messstrom aufweisen, wobei die Ausleseschaltungen (62) ausgangsseitig (68) zusammengeschlossen sind (78), um die Messströme zu einem gemeinsamen Messsignal (RXₒᵤₜ) zusammenzuführen,
**dadurch gekennzeichnet,**
**dass** der Lichtempfänger (34) eine Auswahlschaltung aufweist, mit der wahlweise ein Steuersignal (74) an den Steueranschluss (70) anlegbar ist, so dass das Kopplungselement (64) je nach Steuersignal (74) aktiviert ist und einen Messstrom zu dem gemeinsamen Messsignal (RXₒᵤₜ) beiträgt oder nicht.

2. Lichtempfänger (34) nach Anspruch 1,
wobei die Gruppen jeweils als gemeinsames Empfangselement ausgebildet sind, insbesondere als Siliziumphotomultiplier.

3. Lichtempfänger (34) nach Anspruch 1 oder 2,
wobei zwischen einer Gruppe und einer Ausleseschaltung (62) eine kapazitive Kopplung (60) vorgesehen ist.

4. Lichtempfänger (34) nach einem der vorhergehenden Ansprüche,
wobei das aktive Kopplungselement (64) einen Transistor aufweist.

5. Lichtempfänger (34) nach Anspruch 4,
wobei das Kopplungselement (64) genau einen Transistor aufweist

6. Lichtempfänger (34) nach Anspruch 4 oder 5,
wobei der Transistor (64) in Basisschaltung oder Gateschaltung betrieben ist und die Basis oder das Gate mit dem Steueranschluss (70) verbunden ist.

7. Lichtempfänger (34) nach einem der Ansprüche 4 bis 6,
wobei der Eingang (66) mit dem Emitter oder mit Source und/oder der Ausgang (68) mit dem Kollektor oder mit Drain verbunden ist.

8. Lichtempfänger (34) nach einem der vorhergehenden Ansprüche,
wobei eine Ausgangsleitung (78), mit der die Ausleseschaltungen (62) ausgangsseitig (68) zusammengeschlossen sind, über eine Induktivität (80) nach einer Versorgungsspannung (82) geschaltet ist und/oder ein Hochpassfilter (84) für das gemeinsame Messsignal (RXₒᵤₜ) aufweist.

9. Lichtempfänger (34) nach einem der vorhergehenden Ansprüche,
wobei die Lawinenphotodioden (54) mit einem Strombegrenzungselement und/oder einer steuerbaren Vorspannungsversorgung verbunden sind.

10. Lichtempfänger (34) nach einem der vorhergehenden Ansprüche,
wobei die Auswahlschaltung für ein Aktivieren von Gruppen in einem Multiplexverfahren ausgebildet ist.

11. Lichtempfänger (34) nach einem der vorhergehenden Ansprüche,
wobei die Auswahlschaltung dafür ausgebildet ist, mehrere Gruppen gleichzeitig zu aktivieren.

12. Lichtempfänger (34) nach einem der vorhergehenden Ansprüche,
wobei die Auswahlschaltung für eine gleichzeitige Veränderung des Steuersignals (74) in mehreren Gruppen ausgebildet ist.

13. Optoelektronischer Sensor (10) zur Erfassung eines Objekts in einem Überwachungsbereich (20) mit mindestens einem Lichtsender (22) zum Aussenden mehrerer voneinander separierter Lichtstrahlen (26), einem Lichtempfänger (34) nach einem der vorhergehenden Ansprüche zum Erzeugen von Empfangssignalen aus an dem Objekt remittierten Lichtstrahlen (30) und einer Steuer- und Auswertungseinheit (46) zur Gewinnung von Informationen über das Objekt aus den Empfangssignalen, wobei insbesondere je eine Gruppe je einem Lichtstrahl (30) zugeordnet ist.

14. Optoelektronischer Sensor (10) nach Anspruch 13,
der als mehrstrahliger Laserscanner ausgebildet ist und eine bewegliche Ablenkeinheit (12) aufweist, mit deren Hilfe die ausgesandten Lichtstrahlen (26) periodisch durch den Überwachungsbereich (20) geführt werden.

15. Verfahren zum Auslesen von Lawinenphotodiodenelementen (54), die jeweils mit einer Vorspannung oberhalb einer Durchbruchspannung vorspannbar und somit in einem Geiger-Modus betreibbar sind und die mehrere Gruppen bilden, denen jeweils eine von mehreren Ausleseschaltungen (62) mit jeweils einem aktiven Kopplungselement (74) zugeordnet ist, wobei die Gruppen jeweils bei Lichtempfang einen Photostrom erzeugen, der in einen Eingang (66) einer Ausleseschaltung (62) fließt und in einen dem Photostrom entsprechenden Messstrom an einem Ausgang (68) der Ausleseschaltung (62) abgebildet wird und wobei die Messströme der Ausleseschaltungen (62) zu einem gemeinsamen Messsignal (RXₒᵤₜ) zusammengeführt werden,
**dadurch gekennzeichnet,**
**dass** ein Steuersignal (74) an einen jeweiligen Steueranschluss (70) der Kopplungselemente (64) angelegt wird, um das Kopplungselement (64) wahlweise zu aktivieren oder nicht, wobei nur ein aktiviertes Kopplungselement (64) einen Messstrom zu dem gemeinsamen Messsignal (RXₒᵤₜ) beiträgt.

## Claims

1. A light receiver (34) having a plurality of avalanche photodiode elements (54) that each can be biased at a bias voltage above a breakdown voltage and thus is operable in a Geiger mode, the avalanche photodiode elements (54) forming a plurality of groups that respectively generate a photocurrent upon light reception, and having a plurality of readout circuits (62) for reading out a group of avalanche photodiode elements (54), each comprising an active coupling element (64) having an input (66) for a photocurrent, a control terminal (70) and an output (68) for a measurement current corresponding to the photocurrent, wherein the readout circuits (62) are connected together (78) on the output side (68) in order to combine the measurement currents to form a common measurement signal (RXₒᵤₜ),
**characterized in that** the light receiver (34) comprises a selection circuit usable to selectively apply a control signal (74) to the control terminal (70) so that the coupling element (64), depending on the control signal (74), is or is not activated and thus contributes a measurement current to the common measurement signal (RXₒᵤₜ).

2. The light receiver (34) according to claim 1,
wherein the groups are each formed as a common receiving element, in particular as a silicon photomultiplier.

3. The light receiver (34) according to claim 1 or 2,
wherein a capacitive coupling (60) is provided between a group and a readout circuit (62).

4. The light receiver (34) according to any of the preceding claims,
wherein the active coupling element (64) comprises a transistor.

5. The light receiver (34) according to claim 4,
wherein the coupling element (64) comprises exactly one transistor

6. The light receiver (34) according to claim 4 or 5,
wherein the transistor (64) is operated in base circuit or gate circuit and the base or gate is connected to the control terminal (70).

7. The light receiver (34) according to any one of claims 4 to 6,
wherein the input (66) is connected to the emitter or to source and/or the output (68) is connected to the collector or to drain.

8. The light receiver (34) according to any of the preceding claims,
wherein an output line (78), to which the readout circuits (62) are connected together on the output side (68), is connected via an inductance (80) to a supply voltage (82) and/or has a high-pass filter (84) for the common measurement signal (RXₒᵤₜ).

9. The light receiver (34) according to any of the preceding claims,
wherein the avalanche photodiodes (54) are connected to a current limiting element and/or a controllable bias supply.

10. The light receiver (34) according to any of the preceding claims,
wherein the selection circuit is configured for activating groups in a multiplexing process.

11. The light receiver (34) according to any of the preceding claims,
wherein the selection circuit is configured to activate a plurality of groups simultaneously.

12. The light receiver (34) according to any of the preceding claims,
wherein the selection circuit is configured for simultaneously varying the control signal (74) in a plurality of groups.

13. An optoelectronic sensor (10) for detecting an object in a monitoring area (20), comprising at least one light transmitter (22) for transmitting a plurality of light beams (26) separated from one another, a light receiver (34) according to any of the preceding claims for generating received signals from light beams (30) remitted at the object, and a control and evaluation unit (46) for obtaining information about the object from the received signals, wherein in particular one group is assigned to each light beam (30).

14. The optoelectronic sensor (10) according to claim 13,
that is configured as a multi-beam laser scanner and comprises a movable deflection unit (12) periodically guiding the transmitted light beams (26) through the monitoring area (20).

15. A method for reading out avalanche photodiode elements (54) that each can be biased with a bias voltage above a breakdown voltage and thus be operated in a Geiger mode and that form a plurality of groups with one of a plurality of readout circuits (62) having an active coupling element (74) respectively being assigned, wherein the groups, upon light reception, each generate a photocurrent that flows into an input (66) of a readout circuit (62) and is mapped into a measurement current corresponding to the photocurrent at an output (68) of the readout circuit (62), and wherein the measurement currents of the readout circuits (62) are combined to form a common measurement signal (RXₒᵤₜ), **characterized in that** a control signal (74) is applied to a respective control terminal (70) of the coupling elements (64) to selectively activate or not activate the coupling element (64), wherein only an activated coupling element (64) contributes a measurement current to the common measurement signal (RXₒᵤₜ).

## Revendications

1. Récepteur de lumière (34) comprenant une pluralité d'éléments de photodiodes à avalanche (54) qui peuvent être polarisés chacun avec une tension de polarisation supérieure à une tension de claquage et qui peuvent ainsi fonctionner en mode Geiger et qui forment plusieurs groupes qui génèrent chacun un courant photoélectrique lors de la réception de lumière, et comprenant plusieurs circuits de lecture (62) pour lire un groupe d'éléments de photodiodes à avalanche (54), qui présentent chacun un élément de couplage actif (64) avec une entrée (66) pour un courant photoélectrique, une connexion de commande (70) et une sortie (68) pour un courant de mesure correspondant au courant photoélectrique, les circuits de lecture (62) étant connectés (78) côté sortie (68) pour réunir les courants de mesure en un signal de mesure commun (RXₒᵤₜ),
**caractérisé en ce que**
le récepteur de lumière (34) comprend un circuit de sélection avec lequel un signal de commande (74) peut être appliqué au choix à la connexion de commande (70), de sorte que l'élément de couplage (64) est activé selon le signal de commande (74) et contribue ou non à un courant de mesure au signal de mesure commun (RXₒᵤₜ).

2. Récepteur de lumière (34) selon la revendication 1,
dans lequel les groupes sont formés chacun d'un élément récepteur commun, en particulier d'un photomultiplicateur au silicium.

3. Récepteur de lumière (34) selon la revendication 1 ou 2,
dans lequel un couplage capacitif (60) est prévu entre un groupe et un circuit de lecture (62).

4. Récepteur de lumière (34) selon l'une des revendications précédentes,
dans lequel l'élément de couplage actif (64) comprend un transistor.

5. Récepteur de lumière (34) selon la revendication 4,
dans lequel l'élément de couplage (64) comprend exactement un transistor

6. Récepteur de lumière (34) selon la revendication 4 ou 5,
dans lequel le transistor (64) fonctionne en circuit de base ou en circuit de grille et la base ou la grille est connectée à la connexion de commande (70).

7. Récepteur de lumière (34) selon l'une des revendications 4 à 6,
dans lequel l'entrée (66) est connectée à l'émetteur ou à la source et/ou la sortie (68) est connectée au collecteur ou au drain.

8. Récepteur de lumière (34) selon l'une des revendications précédentes,
dans lequel une ligne de sortie (78), à laquelle les circuits de lecture (62) sont reliés du côté sortie (68), est commutée par une inductance (80) après une tension d'alimentation (82) et/ou présente un filtre passe-haut (84) pour le signal de mesure commun (RXₒᵤₜ).

9. Le récepteur de lumière (34) selon l'une des revendications précédentes,
dans lequel les photodiodes à avalanche (54) sont connectées à un élément de limitation de courant et/ou à une alimentation de polarisation contrôlable.

10. Récepteur de lumière (34) selon l'une des revendications précédentes,
dans lequel le circuit de sélection est configuré pour activer des groupes dans un processus de multiplexage.

11. Récepteur de lumière (34) selon l'une des revendications précédentes,
dans lequel le circuit de sélection est configuré pour activer une pluralité de groupes simultanément.

12. Récepteur de lumière (34) selon l'une des revendications précédentes,
dans lequel le circuit de sélection est configuré pour faire varier simultanément le signal de commande (74) en une pluralité de groupes.

13. Capteur optoélectronique (10) pour la détection d'un objet dans une zone de surveillance (20), comprenant au moins un émetteur de lumière (22) pour l'émission de plusieurs rayons lumineux (26) séparés les uns des autres, un récepteur de lumière (34) selon l'une des revendications précédentes pour la production de signaux de réception à partir de rayons lumineux (30) renvoyés sur l'objet, et une unité de commande et d'évaluation (46) pour l'obtention d'informations sur l'objet à partir des signaux de réception, un groupe étant en particulier associé à chaque rayon lumineux (30).

14. Capteur optoélectronique (10) selon la revendication 13,
qui est configuré comme un scanner laser à faisceaux multiples et comprend une unité de déviation mobile (12) guidant périodiquement les faisceaux lumineux transmis (26) à travers la zone de surveillance (20).

15. Procédé de lecture d'éléments de photodiodes à avalanche (54) qui peuvent être polarisés chacun avec une tension de polarisation supérieure à une tension de claquage et peuvent ainsi fonctionner en mode Geiger et qui forment une pluralité de groupes auxquels est associé respectivement l'un d'une pluralité de circuits de lecture (62) comportant un élément de couplage actif (74), dans lequel les groupes, génèrent chacun, lors de la réception de lumière, un photocourant qui s'écoule dans une entrée (66) d'un circuit de lecture (62) et est transformé en un courant de mesure correspondant au photocourant à une sortie (68) du circuit de lecture (62), et dans lequel les courants de mesure des circuits de lecture (62) sont combinés pour former un signal de mesure commun (RXₒᵤₜ),
**caractérisé en ce qu'**un signal de commande (74) est appliqué à une connexion de commande respective (70) des éléments de couplage (64) pour activer ou ne pas activer sélectivement l'élément de couplage (64), dans lequel seul un élément de couplage activé (64) contribue un courant de mesure au signal de mesure commun (RXₒᵤₜ).
